# EUROPÄISCHE PATENTSCHRIFT

(11) **EP 1 400 716 B1**
(45) Veröffentlichungstag und Bekanntmachung des Hinweises auf die Patenterteilung: **22.06.2005**
(21) Anmeldenummer: 03021283.1
(22) Anmeldetag: 19.09.2003
(51) Int. Cl.: F16D 21/06, F16D 25/12

(54) **Kupplungssystem und Halteanordnung zum Halten wenigstens einer Kupplungsanordnung des Kupplungssystems in einem momentanen oder vorgegebenen Einrückzustand**
Clutch system and holding arrangement to hold at least one clutch arrangement of the clutch system in a temporary or predetermined engagement state
Système d'embrayage et dispositif de retenue pour retenir au moins un embrayage du système d'embrayage dans un état temporaire ou dans un état d'engagement prédéterminé

(30) Priorität: 20.09.2002 EP 02021052
(43) Veröffentlichungstag der Anmeldung: 24.03.2004
(73) Patentinhaber: ZF Sachs AG, 97424 Schweinfurt (DE)
(72) Erfinder: Ebert, Angelika, 97421 Schweinfurt (DE); Müller, Ingo, 97421 Schweinfurt (DE); Grosspietsch, Wolfgang, 97421 Schweinfurt (DE); Wirth, Thomas, 97523 Schwanfeld (DE); Heiartz, Markus, 97084 Würzburg (DE); Orlamünder, Andreas, 97422 Schweinfurt (DE); Reisser, Wolfgang, 97526 Sennfeld (DE)

(56) Entgegenhaltungen:
- US-A- 2 991 863
- US-A1- 2001 030 099

## Beschreibung

Die Erfindung betrifft ein Kupplungssystem, umfassend eine Reibungskupplungseinrichtung zur Anordnung im Antriebsstrang eines Kraftfahrzeugs mit wenigstens einer gegen in Ausrückrichtung wirkenden mechanischen Rückstellkräften einrückbaren Kupplungsanordnung und eine Betätigungseinrichtung zum Einleiten von im Einrücksinne gegen die Rückstellkräfte wirkenden, auf Betätigungskräften einer Aktuatoranordnung beruhenden Einrückkräften in die Reibungskupplungseinrichtung, um die Kupplungsanordnung im Einrücksinne zu betätigen. Derartige Kupplungssysteme des NORMALERWEISE-OFFEN-Typs (NORMALLY OPEN- bzw. NO-Typs) sind vor allem als nasslaufende Kupplungen der Lamellenbauart bekannt, und zwar speziell auch als so genannte Doppel- und Mehrfach-Kupplungen für so genannte Lastschalt- oder Doppelkupplungsgetriebe, bei denen jede von mehreren Kupplungsanordnungen (beim hier angesprochenen bekannten Typ der Lamellen-Bauart) einer eigenen Getriebeeingangswelle zugeordnet ist. Derartige Doppelkupplungen haben in jüngerer Zeit größere Aufmerksamkeit erfahren, da sie auf Grundlage einer so genannten "Überschneidungsschaltung in Verbindung mit einem automatisiert schaltbaren Getriebe einen hohen Fahrkomfort ähnlich wie bei einem herkömmlichen Automatgetriebe mit Drehmomentwandler versprechen, aber demgegenüber einen höheren Wirkungsgrad aufweisen. Eine von der Anmelderin favorisierte Bauart für eine derartige nasslaufende Doppelkupplung ist beispielsweise aus der DE 100 04 179 A1 bekannt.

Weiterhin sind Kupplungssysteme des NORMALERWEISE-OFFEN-Typs bekannt, welche mittels eines handbetätigten Betätigungshebels eingerückt werden können (z.Bsp. US 2 991 863). Hierbei wird ein Betätigungshebel in eine Über-Totpunktlage gebracht, sodass die Kupplung im eingerücktem Zustand arretiert wird.

Von Interesse ist aber auch die Verwendung von trocken laufenden Doppel- oder Mehrfach-Kupplungen insbesondere der Reibscheibenbauart. Es wird beispielsweise auf die EP 0 931 951 A1 und die DE 35 26 630 A1 verwiesen.

Trockenlaufende Kupplungen der Reibscheibenbauart sind herkömmlich vom NORMALERWEISE-GESCHLOSSEN-Typ (NORMALLY CLOSED bzw. NC-Typ), und werden nur während des Schaltvorgangs betätigt. Im Falle einer automatisierten Kupplung liegt die Einschaltdauer des Aktuator typischerweise zwischen 1 bis 5% der Betriebsdauer des Fahrzeugs. Für Doppel- oder Mehrfach-Kupplungssysteme ist es aus Sicherheitsgründen hingegen vorzuziehen, dass die Kupplungsanordnungen der jeweiligen Kupplungseinrichtung vom Typ NORMALERWEISE-OFFEN sind. Hierdurch wird gewährleistet, dass im Fehlerfall nicht beide bzw. mehrere Kupplungsanordnungen gleichzeitig geschlossen sind bzw. schließen und der Antriebsstrang hierdurch verspannt oder sogar schwerwiegende Beschädigungen im Antriebsstrang auftreten. Aufgrund der herkömmlichen Ansätze müsste bei trockenlaufenden Kupplungen für das NORMALERWEISE-OFFEN-Systemverhalten die beim Betrieb des Fahrzeugs ständig benötigte Anpresskraft für die jeweilige Kupplungsanordnung ständig aktiv durch einen Aktuator aufgebracht werden. Dies ist weder hinsichtlich der Energiebilanz noch hinsichtlich der Belastung der Bauteile in der Kette zwischen den Reibflächen, insbesondere der Anpressplatte, der jeweiligen Kupplungsanordnung einerseits und dem zugeordneten Aktuator andererseits vorteilhaft. Bei nasslaufenden Doppel- oder Mehrfach-Kupplungen, wie etwa bei der vorstehend angesprochenen Bauart der Anmelderin, wird das vorzuziehende NORMALERWEISE-OFFEN-Systemverhalten dadurch erreicht, dass die jeweilige Kupplungsanordnung über eine hydraulische Betätigungseinrichtung aktiv geschlossen wird. Auch hier hat das Erfordernis des aktiven Schließens der jeweiligen Kupplungsanordnung einen negativen Effekt auf die Energiebilanz, da nämlich wegen in der Praxis schlecht zu vermeidenden Leckagen in Drehdurchführungen und dergleichen ständig Druckmedium nachgefördert werden muss, um die benötigte Anpresskraft aufzubringen. Durch den Einsatz von Druckspeichem kann die Einschaltdauer von etwa elektromotorisch angetriebenen Pumpen aber auf ein den meisten Anforderungen genügendes Maß begrenzt werden.

Aufgabe der Erfindung ist, zur zumindest teilweisen Lösung der angsprochenen Probleme einen Lösungsansatz anzugeben. Die Erfinder haben sich gefragt, ob bzw. wie es bei einem Kupplungssystem der eingangs angegebenen Art etwa im Hinblick auf die Energiebilanz oder/und die Belastbarkeit von Bauteilen möglich sein könnte, das Kupplungssystem bzw. die wenigstens eine Kupplungsanordnung desselben in einem Einrückzustand zu halten, die eine Aufrechterhaltung oder zumindest annähernde Aufrechterhaltung eines momentanen Betriebszustands oder Fahrzustands des Fahrzeugs ermöglicht, ohne dass durch die Aktuatoranordnung ständig Betätigungskräfte erzeugt werden müssen.

Erfindungsgemäß wird vorgeschlagen, dass eine der Reibungskupplungseinrichtung oder/und der Kupplungsanordnung oder/und der Betätigungseinrichtung oder/und der Aktuatoranordnung zugeordnete Halteanordnung vorgesehen ist, mittels der die Kupplungsanordnung gegen die Wirkung der Rückstellkräfte unabhängig von der Erzeugung von Betätigungskräften durch die Aktuatoranordnung im Wesentlichen in jeden beliebigen momentanen Einrückzustand oder in einem von einer Mehrzahl von vorgegebenen diskreten Halte-Einrückzuständen dem momentanen Einrückzustand zugeordneten Halte-Einrückzustand haltbar ist.

Mittels der erfindungsgemäßen Halteanordnung, die beispielsweise eine Art Verriegelungsmechanismus oder eine Art Bremsmechanismus aufweisen kann, ist es möglich, den momentanen Einrückzustand oder zumindest einem dem momentanen Einrückzustand zugeordneten, beispielsweise benachbarten Hälte-Einrückzustand zu halten, ohne dass die den Einrücken der Kupplungsanordnung dienende Aktuatoranordnung ständig Betätigungskräfte erzeugen muss. Es kann also beispielsweise eine aktuelle Position eine Anpressplatte oder allgemein ein Anpresszustand der Reibflächenanordnung vermittels der Halteanordnung aufrechterhalten oder statt der momentanen Position bzw. des momentanen Zustands eine zugeordnete Halte-Position oder ein zugeordneter Halte-Zustand aufrechterhalten werden, ohne dass etwa ein Elektromotor der Kupplungsaktuatorik oder dergleichen dauerhaft bestromt werden muss. Die Halteanordnung wird für die Aufrechterhaltung der Position bzw. des Zustands bzw. für das Halten der Halte-Position bzw. des Halte-Zustands in der Regel lediglich eine Hilfsenergie benötigen.

Um für das Kupplungssystem insgesamt ein NORMALERWEISE-OFFEN-Systemverhalten zu erhalten, müssen alle Bestandteile bzw. Teilsysteme des Systems, die einen momentanen Einrückzustand einstellen bzw. halten können, vom Typ NORMALERWEISE-OFFEN sein. Dies gilt auch für die Halteanordnung, die einerseits erfindungsgemäß dafür ausgelegt ist, den angesprochenen Einrückzustand bzw. Halte-Einrückzustand zu halten, und andererseits, zumindest in der Regel, selbst vom Typ NORMALERWEISE-OFFEN sein sollte, um beispielsweise bei energiefreiem System, wenn etwa die elektrische Energieversorgung des Kraftfahrzeugs zusammengebrochen ist oder die Steuerelektronik bzw. zugehörige Endstufen der Leistungselektronik ausgefallen sind bzw. im Fehlerfall abgeschaltet sind, insgesamt ein NORMALERWEISE-OFFEN-Systemverhalten zu garantieren. Das jeweilige NORMALERWEISE-OFFEN-Systemverhalten kann auf einfache Weise durch mechanische Kraftspeicher erreicht werden, die etwa im Falle der Kupplungsanordnung auf die Reibflächen oder/und ein zugeordnetes Betätigungselement in Ausrückrichtung wirken bzw. im Falle der Halteanordnung einen Halteeingriff zwischen einander zugeordneten Komponenten aufheben. Hier bestehen grundsätzlich diverse Möglichkeiten, von denen im Folgenden einige bevorzugte konkret angesprochen werden.

Hinsichtlich der Ausbildung der Betätigungseinrichtung und der Aktuatoranordnung bestehen vielfältige Möglichkeiten. Geeignete Stelleinrichtungen für die Betätigung der Kupplungsanordnung bzw. einer jeweiligen mehrerer Kupplungsanordnungen der Reibungskupplungseinrichtung sind beispielsweise aus der DE 37 06 849 A1 und der DE 197 29 997 A1 bekannt.

So kann die Betätigungseinrichtung vorteilhaft, wenigstens ein der Kupplungsanordnung zugeordnetes Betätigungsglied umfassen, das relativ zu wenigstens einem axial im Wesentlichen feststehenden Stützglied zum Ausüben der Einrückkräfte axial verstellbar ist und zu einem der Kupplungsanordnung zugeordneten Aktuator gehört oder unter Vermittlung eines der Kupplungsanordnung zugeordneten Aktuators axial relativ zum Stützglied verstellbar ist. Vorteilhaft kann ein derartiger Eingriff zwischen dem Betätigungsglied und dem Stützglied vorgesehen sein, das eine unter Vermittlung des Aktuators dem Betätigungsglied erteilte Drehbewegung relativ zu dem gegen Verdrehung abgestützten Stützglied in eine axiale Translationsbewegung des Betätigungsglieds relativ zu dem axial abgestützten Stützglied umgesetzt wird, um die Kupplungsanordnung im Einrücksinne zu betätigen. Im Hinblick auf das angesprochene NORMALERWEISE-OFFEN-Systemverhalten wird weiterbildend vorgeschlagen, auf Grundlage der Rückstellkräfte dem Betätigungsglied eine zur Translationsbewegung entgegengesetzte Rück-Translationsbewegung erteilbar ist, die auf Grundlage des Eingriffs zwischen dem Betätigungsglied und dem Stützglied in eine zur Drehbewegung entgegengesetzte Rück-Drehbewegung des Betätigungsglieds relativ zu dem axial abgestützten Stützglied umgesetzt wird.

Man kann vorteilhaft vorsehen, dass das/ein Betätigungsglied der Betätigungseinrichtung mit einem Ausgangsteil des elektromotorischen Aktuators bewegungsverkoppelt oder bewegungsverkoppelbar ist. Das Ausgarigsteil kann ein um eine Achse dreh- oder schwenkbares Ausgangsteil sein.

In der Regel wird es vorteilhaft sein, eine Koppelmechanik vorzusehen, über die das Betätigungsglied mit dem Ausgangsteil bewegungsverkoppelt oder bewegungsverkoppelbar ist. Die Koppelmechanik kann wenigstens ein bewegbar, insbesondere dreh- oder schwenkbar angeordnetes Eingangsteil, das mit dem Ausgangsteil des Aktuators bewegungsverkoppelt oder bewegungsverkoppelbar ist, aufweisen. Ferner kann die Koppelmechanik vorteilhaft wenigstens ein bewegbar, insbesondere dreh- oder schwenkbar angeordnetes Ausgangsteil, das mit dem Betätigungsglied bewegungsverkoppelt oder bewegungsverkoppelbar ist, aufweisen. Es sei angemerkt, dass das Eingangsteil und das Ausgangsteil von einem einzigen Bauteil gebildet sein können oder Teile einer integral oder einteilig ausgeführten Bauteilgruppe oder eines einteilig ausgeführten Bauteils sein können.

Eine zweckmäßige Ausführungsform des Kupplungssystems zeichnet sich dadurch aus, dass wenigstens eine Druckplatte der Reibungskupplungseinrichtung über eine/die Koppelmechanik von dem Aktuator betätigbar ist, wobei die Koppelmechanik eine translatorische oder rotatorische Stellbewegung in eine Betätigungsbewegung der Druckplatte umsetzt. Beispielsweise kann ein durch den Aktuator zumindest translatorisch betätigbarer Stößel direkt oder über wenigstens einen Einrückhebel auf die Druckplatte wirken. Eine andere Möglichkeit ist, dass ein durch den Aktuator zumindest rotatorisch betätigbarer Excenter direkt oder über wenigstens einen Einrückhebel auf die Druckplatte wirkt.

Im Hinblick auf das angesprochene NORMALERWEISE-OFFEN-Systemverhalten wird weiterbildend vorgeschlagen, dass das Ausgangsteil des Aktuators oder/und die Koppelmechanik auf Grundlage der Rückstellkräfte in Richtung einer einem ausgerückten Zustand der Kupplungsanordnung entsprechenden Stellung verstellbar ist.

Die Halteanordnung kann auf wenigstens eines der vorstehend angesprochenen Teile oder Glieder wirken. Allgemein wird vorgeschlagen, die Halteanordnung dafür ausgebildet ist, wenigstens ein Glied einer' von einem/dem Aktuator zu einer miteinander in paarweisen reibschlüssigen Eingriff bringbaren Reibflächenanordnung führenden Betätigungskette in einer momentanen Stellung oder einer der momentanen Stellung zugeordneten, zu dieser benachbarten Haltestellung zu halten. Dabei ist zu beachten, dass die Betätigungskette das/ein Ausgangsteil des Aktuators sowie ggf. wenigstens ein mit dem Ausgangsteil bewegungsverkoppeltes internes Teil, insbesondere Übertragungsteil oder Betätigungsteil, innerhalb des Aktuators umfassen kann. Ferner kann die Betätigungskette wenigstens ein wenigstens eine Reibfläche der Reibflächenanordnung aufweisendes Bauteil der Kupplungsanordnung umfassen. Bezug nehmend auf die oben angesprochenen Möglichkeiten der Ausbildung der Betätigungseinrichtung wird darauf hingewiesen, dass die Betätigungskette das Betätigungsglied sowie ggf. wenigstens ein Koppelteil, insbesondere Eingangsteil oder/und Ausgangsteil, der Koppelmechanik umfassen kann.

Allgemein wird vorgeschlagen, dass das betreffende Glied, also das Glied, welches durch die Halteanordnung in der momentanen Stellung oder einer der momentanen Stellung zugeordneten, zu dieser benachbarten Haltestellung gehalten werden kann, mit einem zugeordneten Halteglied der Halteanordnung in Halteeingriff bringbar ist. Der Halteeingriff kann ein formschlüssiger Eingriff oder ein kraftschlüssiger, beispielsweise reibschlüssiger Eingriff, sein. Um gewissermaßen eine "stufenlose" Verriegelbarkeit bzw. Fixierbarkeit des betreffenden Glieds vorzusehen, wird vorgeschlagen, dass das betreffende Glied über einen diesem zugeordneten kontinuierlichen Bewegungsbereich in jeder beliebigen momentanen Position durch den Halteeingriff mit dem Halteglied haltbar ist. Für viele Zwecke wird es aber auch ausreichen, wenn das betreffende Glied nur in diskreten Schritten oder vorgegebenen (beispielsweise geometrisch vorgegebenen) Stufen verriegelbar bzw. fixierbar ist. Hierzu wird vorgeschlagen, dass das betreffende Glied über einen diesem zugeordneten kontinuierlichen Bewegungsbereich nur in einer Mehrzahl von vorgegebenen diskreten Haltepositionen durch den Halteeingriff mit dem Halteglied haltbar ist.

In der Regel wird wenigstens ein gegenüber dem Aktuator gesondertes Stellglied vorgesehen sein, mittels dem das betreffende Glied und das zu geordnete Halteglied in Halteeingriff bringbar ist. Alternativ oder zusätzlich kann wenigstens ein Stellglied vorgesehen sein, mittels dem der Halteeingriff zwischen dem betreffenden Glied und dem zugeordneten Halteglied aufhebbar ist.

Betreffend die Verriegelung bzw. Fixierung des betreffenden Glieds nur in einer Mehrzahl von vorgegebenen diskreten Haltepositionen wird in diesem Zusammenhang vorgeschlagen, dass auf Grundlage eines über die Kupplungsanordnung zu übertragenden Drehmoments oder/und auf Grundlage einer ggf. auftretenden Schlupfdrehzahl der Kupplungsanordnung das Stellglied ansteuerbar oder/und das Halteglied relativ zu dem betreffenden Glied verstellbar ist, um eine auf das zu übertragende Drehmoment oder/und einer Vorgabe betreffend die Schlupfdrehzahl oder die Schlupffreiheit abgestimmte Halteposition einzustellen, erforderlichenfalls im Zusammenwirken mit einer Verstellung des betreffenden Glieds mittels dem Aktuator. So wird man beim Einsatz einer Verriegelung, die in diskreten Schritten oder etwa geometrisch vorgegebenen Stufen arbeitet, in der Regel eine akzeptable Anpassung an den jeweiligen Lastzustand der Kupplungsanordnung erreichen können. Hierbei wird es in der Regel zweckmäßig sein, eine solche Verriegelungsstufe auszuwählen, die das momentan übertragene Drehmoment abdeckt. Wird hingegen die Obergrenze der Verriegelungsstufe überschritten, so tritt Kupplungsschlupf (eine Relativdrehzahl) auf. Der Kupplungsschlupf bzw. die Relativdrehzahl kann vorteilhaft als Eingangssignal zur Aktivierung des Stellglieds oder/und des Aktuators dienen, um die nächste Verriegelungsstufe einzustellen, ggf. einzurasten.

Im Hinblick auf das angesprochene NORMALERWEISE-OFFEN-Systemverhalten wird vorgeschlagen, dass das betreffende Glied und das zugeordnete Halteglied durch das Stellglied gegen auf wenigstens eines dieser Glieder wirkende, vorzugsweise von einer Kraftspeicheranordnung aufgebrachte mechanische Rückstellkräfte in Halteeingriff bringbar sind und der Halteeingriff auf Grundlage der Rückstellkräfte aufhebbar ist.

Für manche Anwendungen kann es demgegenüber aber auch sehr zweckmäßig sein, wenn das betreffende Glied und das zugeordnete Halteglied durch von einer mechanischen Einrückanordnung, insbesondere Kraftspeicheranordnung aufgebrachte Einrückkräfte in Halteeingriff bringbar sind und der Halteeingriff durch das Stellglied aufhebbar ist. Auf diese Weise ist ein beispielsweise als "NORMALERWEISE-GEHALTEN"-Systemverhalten oder "NORMALLY-STOPPED"-Systemverhalten bezeichenbares Systemverhalten erreichbar, nach dem ein momentaner Betätigungszustand des Kupplungssystems stets gehalten wird, sofern nicht eine Änderung des momentanen Betätigungszustands im Sinne eines Einrückens oder weiteren Einrückens oder eines Ausrückens oder weiteren Ausrückens durch entsprechende Ansteuerung der Aktuatoranordnung und des Stellglieds eingestellt wird. Insbesondere kann erreicht werden, dass bei kraft- bzw. stromlos werdenden System der momentane Betätigungszustand gehalten wird. Ein derartiges Systemverhalten ist beispielsweise im Zusammenhang mit der Betätigung eines Verteilergetriebes in einem Kraftfahrzeug von Interesse. Es wird speziell an solche Verteilergetriebe gedacht, die in Allradfahrzeugen zur Drehmomentübertragung zwischen Vorder- und Hinterachse eingesetzt werden. Das Verteilergetriebe kann beispielsweise eine nasslaufende Lamellenkupplung aufweisen, welche zur Drehmomentübertragung eingerückt werden muss durch Aufbringen entsprechender Betätigungskräfte. Es kann sich also beispielsweise um eine Kupplung vom "NORMALERWEISE-OFFEN"-Typ handeln. Für eine derartige Anordnung ist es vorteilhaft, wenn der momentane Kupplungszustand der Lamellenkupplung, insbesondere ein mehr oder weniger stark eingerückter Kupplungszustand der Lamellenkupplung, dann gehalten wird, wenn das System kraft- bzw. stromlos wird. Dies kann beispielsweise auf einfache Weise dadurch erreicht werden, dass als Aktuator ein Elektromotor mit eingebauter Motorbremse eingesetzt wird.

Hinsichtlich der Ausbildung des auch als Steiler bezeichenbaren Stellglieds bestehen vielfältige Möglichkeiten. Es wird beispielsweise daran gedacht, dass das Stellglied wenigstens einen Elektromotor zum Erzeugen von Stellkräften aufweist.

Bezug nehmend auf die oben angesprochenen Ausführungsmöglichkeiten für die Betätigungseinrichtung wird beispielsweise daran gedacht, dass das Betätigungsglied das betreffende Glied ist. Eine andere Möglichkeit ist, dass das Ausgangsteil des Aktuators oder ein damit bewegungsverkoppeltes internes Teil des Aktuators das betreffende Glied ist. Anders ausgedrückt, kann die Halteanordnung in einen/den Aktuator der Aktuatoranordnung integriert sein. Es wurde speziell schon die Möglichkeit angesprochen, dass als Aktuator ein Elektromotor mit eingebauter Motorbremse eingesetzt ist, wobei die Motorbremse dafür ausgelegt ist, im stromlosen Zustand des Elektromotors einen momentanen Betätigungszustand des Elektromotors, insbesondere eine momentane Drehstellung eines/des Ausgangsteils des Elektromotors zu halten.

Es bestehen auch noch andere Möglichkeiten. Beispielsweise kann das oder ein Koppelteil der Koppelmechanik, insbesondere das Eingangsteil oder/und das Ausgangsteil der Koppelmechanik, das betreffende Glied sein.

Eine besonders bevorzugte Ausführungsmöglichkeit der Betätigungseinrichtung zeichnet sich dadurch aus, dass das Ausgangsteil des Aktuators und das/ein Eingangsteil der Koppelmechanik über ein Schnecken- oder Zahnradgetriebe bewegungsverkoppelt sind oder ein eine Bewegungsverkoppelung vorsehendes Schnecken- oder Zahnradgetriebe bilden. Hierzu wird speziell vorgeschlagen, dass das als Zahnrad oder Zahnradsegment ausgeführte Eingangsteil der Koppelmechanik oder ein damit bewegungsverkoppeltes oder bewegungsverkoppelbares Stößelelement zur direkten oder indirekten Ankoppelung am Betätigungsglied das betreffende Glied ist.

Aus den obigen Ausführungen ergibt sich schon, dass betreffend die Kupplungsanordnung vor allem daran gedacht wird, dass diese eine trockenlaufende Kupplungsanordnung, und zwar vorzugsweise eine Kupplungsanordnung der Reibscheibenbauart, ist. Ferner ergibt sich aus den obigen Ausführungen schon, dass die Kupplungseinrichtung eine Doppel- oder Mehrfach-Kupplungseinrichtung sein kann, mit einem einem ersten Getriebezug zugeordneten ersten Kupplungsanordnung und einer einem zweiten Getriebezug zugeordneten zweiten Kupplungsanordnung, die unabhängig voneinander mittels eines jeweiligen Aktuators betätigbar sind. Die jeweilige Kupplungsanordnung kann speziell einer jeweiligen, einen Eingang für den jeweiligen Getriebezug darstellenden Getriebeeingangswelle zugeordnet sein.

Man kann in diesem Zusammenhang vorsehen, dass die mit beiden Kupplungsanordnungen in Wirkverbindung stehende oder bringbare Halteanordnung mit einem einzigen Stellglied ausgeführt ist, unter dessen Vermittlung wahlweise die erste oder die zweite Kupplungsanordnung unabhängig von der Erzeugung von Betätigungskräften durch den jeweiligen Aktuator in einem momentanen Einrückzustand oder einem dem momentanen Einrückzustand zugeordneten Halte-Einrückzustand haltbar ist. Es wird in diesem Zusammenhang speziell daran gedacht, dass zu einem Zeitpunkt nur eine der beiden Kupplungsanordnungen in einem momentanen Einrückzustand oder einem dem momentanen Einrückzustand zugeordneten Halte-Einrückzustand haltbar ist.

Man kann also durchaus vorsehen, dass die vom Stellglied aufbringbare Haltekraft abwechselnd nur auf eines der Teilsysteme wirkt, was auf Grundlage einer geschickten Anordnung der verschiedenen Komponenten praktisch ohne weiteres realisierbar ist. Für die meisten Anforderungen wird es ausreichen, dass jeweils nur eines der Teilsysteme, nämlich in der Regel das momentan drehmomentführende Teilsystem, mittels der Halteanordnung verriegelt bzw. im Einrückzustand bzw. Halte-Einrückzustand gehalten werden kann. Aus der Verwendung nur eines Stellglieds ergeben sich entsprechende Kostenvorteile.

Häufig wird es aber zweckmäßig sein, zwei voneinander unabhängige Halteanordnungen vorzusehen, um die beiden Kupplungsanordnungen unabhängig voneinander sowie unabhängig von der Erzeugung von Betätigungskräften durch den jeweiligen Aktuator in einem momentanen Einrückzustand oder einem dem momentanen Einrückzustand zugeordneten Halte-Einrückzustand halten zu können. Es können gemäß diesem Vorschlag beide Teilsysteme zeitgleich verriegelt bzw. in einem momentanen Einrückzustand bzw. Halte-Einrückzustand gehalten werden. Man kann beispielsweise die Kupplungsscheibe oder allgemein die Reibflächenanordnung des momentan nicht drehmomentführenden Teilgetriebes fest einspannen, um ein "Verbrennen des Kupplungsbelages" in Folge eines Anschleifens/Anstoßens des Belags an rotierenden Bauteilen (etwa zentrale Zwischenplatte, Anpressplatte) zu verhindern.

Allgemein wird ferner daran gedacht, dass die Kupplungsanordnung eine nasslaufende Kupplungsanordnung vorzugsweise der Lamellenbauart ist. Eine derartige Kupplungsanordnung bzw. eine entsprechende Reibungskupplungseinrichtung kommt beispielsweise als bzw. im Zusammenhang mit dem oben angesprochenen Verteilergetriebe in einem Allrad-Kraftfahrzeug in Betracht. Im Falle einer als Doppel- oder Mehrfach-Kupplungseinrichtung ausgeführten Kupplungseinrichtung zwischen der Antriebseinheit und dem Getriebe kommen ebenfalls nasslaufende Kupplungsanordnungen der Lamellenbauart vorteilhaft in Betracht.

Die Erfindung wird im Folgenden anhand von in den Figuren gezeigten Ausführungsbeispielen näher erläutert.
- Fig. 1: zeigt schematisch ein Beispiel einer trockenlaufenden Doppelkupplung der Reibscheibenbauart, und zwar des NORMALERWEISE-OFFEN-Typs.
- Fig. 2: zeigt ein konkreteres Ausführungsbeispiel für eine Kupplung der in Fig. 1 gezeigten Art zusammen mit zugehöriger Aktuatorik.
- Fig. 3: zeigt in einer perspektivischen Ansicht einen Bereich der Anordnung gemäß Fig. 2, nämlich zwei Aktuatoren mit zugehörigen Koppelelementen zur Übertragung von Stellkräften auf ein Betätigungsmodul der Doppelkupplung.
- Fig. 4: zeigt in den Teilfiguren 4a und 4b eine Alternative zur Anordnung gemäß Fig. 3, wobei Fig. 4a auch zur näheren Erläuterung eine Ausführungsvariante einer erfindungsgemäßen Halteanordnung dient.
- Fig. 5: ist ein Beispiel zur Erläuterung einer weiteren Ausführungsvariante einer erfindungsgemäßen Halteanordnung.

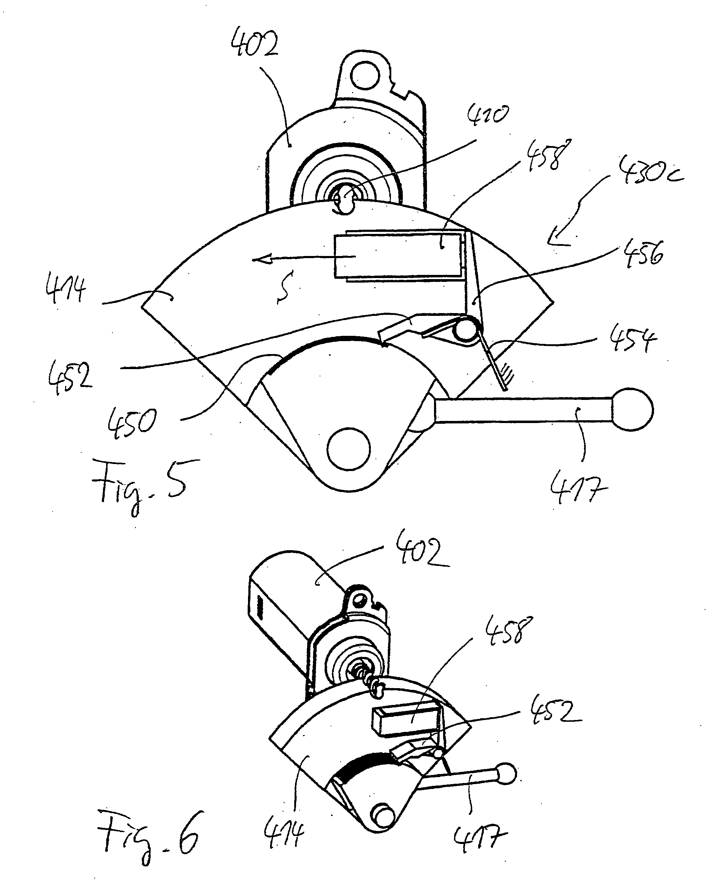

- Fig. 6: zeigt die Anordnung der Fig. 5 in einer perspektivischen Ansicht.
- Fig. 7: zeigt in einer Darstellung entsprechend Fig. 4a bzw. 4b einen weiteren Aktuator mit einer erfindungsgemäßen Halteanordnung, der im Gegensatz zur Halteanordnung der Fig. 4 nicht für ein NORMALERWEISE-OFFEN-Systemverhalten, sondern für ein "NORMALERWEISE-GEHALTEN"-Systemverhalten ausgelegt ist.
- Fig. 8: zeigt einen erfindungsgemäßen Kraftfahrzeug-Antriebsstrang mit einer dem Getriebe nachgeschalteten Verteil-Kupplungseinrichtung des nasslaufenden Lamellentyps zum Verteilen des Antriebsmoments zwischen Vorder- und Hinterachse in einem Allradfahrzeug.
- Fig. 9: zeigt eine Ausführungsvariante des Antriebsstrangs gemäß Fig. 8.

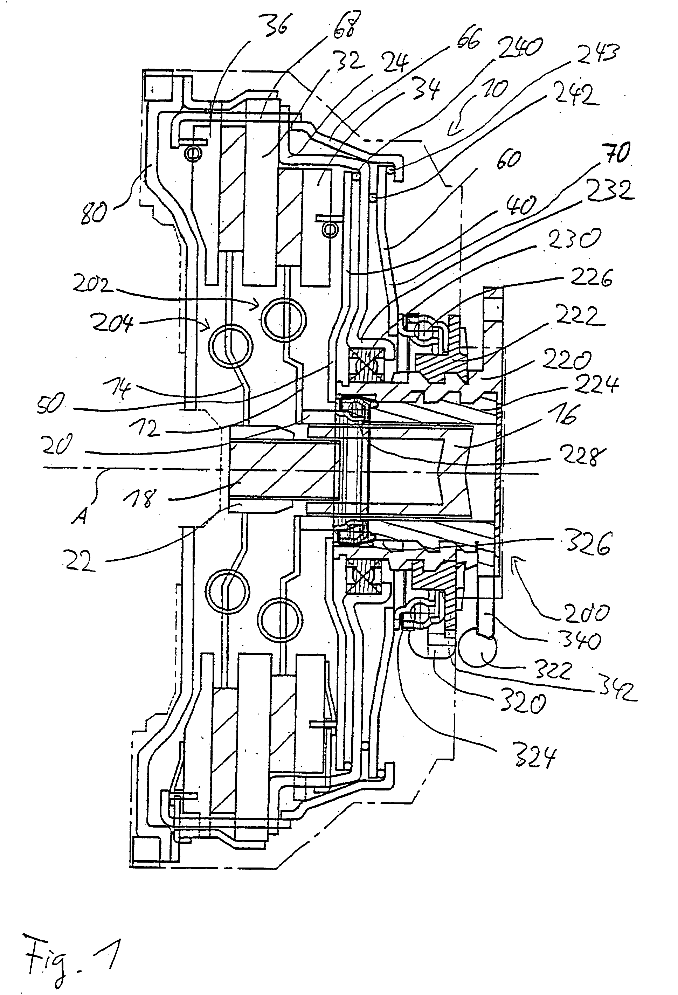

Fig. 1 zeigt eine Doppelkupplung 10 der Reibscheibenbauart, die eine erste Kupplungsscheibe 12 einer ersten Kupplungsanordnung und eine zweite Kupplungsscheibe 14 einer zweiten Kupplungsanordnung aufweist. Die erste Kupplungsscheibe 12 steht mit einer als Hohlwelle ausgeführten ersten Getriebeeingangswelle. 16 und die zweite Kupplungsscheibe 14 steht mit einer sich koaxial durch die erste Getriebeeingangswelle 16 erstreckenden zweiten Getriebeeingangswelle 18 auf an sich bekannte Art und Weise in Momentenübertragungsverbindung. Die mit integrierten Torsionsschwingungsdämpfern 202 und 204 ausgeführten Kupplungsscheiben weisen beispielsweise eine Koppelnabe 20 bzw. 22 auf, die auf die betreffende Getriebeeingangswelle aufgeschoben ist und mit dieser über Mitnahmeformationen drehfest gekoppelt ist.

Die Doppelkupplung 10 weist eine Gehäuseanordnung 24 auf, die beispielsweise mehrere durch Schraubbolzen oder dergleichen miteinander verbundene Gehäuseteile umfasst. Die Gehäuseanordnung 24 ist über eine Flexplatte 80 an der Abtriebswelle 84 der Antriebseinheit, insbesondere einer Brennkraftmaschine, angebunden.

Ein beidseitig Reibbeläge tragender ringförmiger Abschnitt der ersten Kupplungsscheibe 12 ist axial zwischen einem ein Widerlager für die Kupplungsscheibe bildenden Druckplattenabschnitt 32 der Gehäuseanordnung und einer in der Gehäuseanordnung axial beweglich gehaltenen ersten Anpressplatte 34 angeordnet. Die zweite Kupplungsscheibe 14 ist mit ihrem beidseitig Reibbeläge tragenden Ringbereich axial zwischen dem ein Widerlager für die Kupplungsscheibe bildenden Druckplattenabschnitt 32 und einer in der Gehäuseanordnung axial beweglich gehaltenen zweiten Anpressplatte 36 gehalten. Die beiden Anpressplatten sind jeweils auf an sich bekannte Art und Weise durch Tangentialfedem (Tangentialblattfedern) oder dergleichen in der Gehäuseanordnung 24 gehalten und jeweils in Öffnungs- oder Ausrückrichtung federvorgespannt.

Der ersten Anpressplatte 34 ist eine erste Teller- oder Membranfeder 40 und der zweiten Anpressplatte 36 ist eine zweite Teller- oder Membranfeder 60 zugeordnet. Für beide Federn 40 und 60 ist eine Schwenkabstützung an der Gehäuseanordnung vermittels eines jeweiligen Abstützrings 240 bzw. 242 vorgesehen. Die Membranfedern 40 und 60 wirken in erster Linie als Betätigungshebel, die zum Einrücken der jeweiligen Anpressplatte 34 bzw. 36 gegen die jeweilige, an dem Widerlager 32 axial abstützbaren Kupplungsscheibe mit ihren Betätigungszungen oder Betätigungshebeln 50 bzw. 70 in Richtung zu den Kupplungsscheiben, also in Fig. 1 nach links, zu drücken ist. Die in der Art eines einarmigen Hebels angeordnete Membranfeder 40 wirkt dabei direkt oder über ein Zwischenelement auf die in enger Nachbarschaft zur Feder angeordnete Anpressplatte 34. Die in der Art eines zweiarmigen Hebels angeordnete Membranfeder 60 steht hingegen über ein unter Vermittlung eines Abstützrings 243 an ihrem Außenradius angreifendes Kraftübertragungsglied 66 und eine sich durch die Gehäuseanordnung und den Druckplattenabschnitt 32 erstreckende Zugankeranordnung 68 mit der Anpressplatte 36 in Verbindung.

Die von den beiden Kupplungsscheiben 12 und 14 und den zugehörigen Komponenten 32, 34 und 36 gebildeten beiden Kupplungsanordnungen sind über ein zur Doppelkupplung zugehöriges Betätigungsmodul 200 betätigbar. Das Betätigungsmodul weist eine am Getriebegehäuse insbesondere gegen ein Verdrehen gesicherte Zentralhülse 220 auf, die eine Außenhülse 222 und eine Innenhülse 224 trägt. Die Außenhülse 222 und die Innenhülse 224 stehen jeweils über ein Außengewinde bzw. Innengewinde mit der Zentralhülse 220 in Eingriff, derart, dass eine Verdrehung der Außenhülse oder/und der Innenhülse relativ zur Zentralhülse eine axiale Verlagerung der betreffenden Hülse (Außenhülse bzw. lnnenhülse) induziert. Die Außenhülse 222 ist mit einem Einrücklager 226 versehen, und die Innenhülse 224 ist mit einem Einrücklager 228 versehen, über die unter Vermittlung der Außenhülse bzw. Innenhülse axiale Kräfte auf die Membranfederzungen der Membranfeder 40 bzw. 60 ausgeübt werden können, um die Betätigungszungen der jeweiligen Membranfeder in Richtung zur Antriebseinheit auszulenken und damit die erste oder/und zweite Kupplungsanordnung in Einrückrichtung zu betätigen. Die Einrücklager 226 und 228 können mit Federblechen 324 und 326 ausgeführt sein, um eine Selbstzentrierung des jeweiligen Lagers vorzusehen.

Um der Außenhülse und der Innenhülse eine entsprechende Drehbewegung in Einrückrichtung zu erteilen, können die Hülsen beispielsweise mit radial vorstehenden Hebelarmen oder Hebelabschnitten ausgeführt sein; auf die ein jeweils zugeordnetes Stellglied wirkt. Ein Hebelarm der Innenhülse ist in Fig. 1 mit 340 und ein Hebelarm der Außenhülse ist in Fig. 1 mit 342 bezeichnet. 322 und 320 bezeichnen einen am betreffenden Hebelarm oder Hebelabschnitt vorgesehenen Kraftangriffspunkt, beispielsweise in der Art einer Kugelkalotte, um eine im Wesentlichen tangential gerichtete Betätigungskraft auf die jeweilige Hülse ausüben zu können.

Um einen geschlossenen Axialkraftfluss innerhalb der die eigentliche Doppelkupplung 10 und das Betätigungsmodul 200 umfassenden Baueinheit vorzusehen, steht die Zentralhülse 220 über ein Radial- und Axiallager 230 mit der Gehäuseanordnung der Doppelkupplung in Abstützbeziehung. 232 bezeichnet einen hierfür vorgesehenen Ringabschnitt eines Gehäuseteils der Gehäuseanordnung. Das Radial- und Axiallager 230 kann durch einen nicht dargestellten Sicherungsring zwischen dem Ringabschnitt 232 und der Zentralhülse 220 axial festgelegt sein.

Zu weiteren Einzelheiten der Doppelkupplungskonstruktion gemäß Fig. 1 und des Betätigungsmoduls 200 sowie zu vorteilhaften Ausführungsvarianten hierzu wird auf die deutsche Patentanmeldung "Betätigungseinrichtung für eine Reibungskupplungseinrichtung, ggf. Doppel- oder Mehrfach-Reibungskupplungseinrichtung" der Anmelderin, amtliches Aktenzeichen 101 49 703.2, vom 09.10.2001 bzw. Nachanmeldungen hierzu, verwiesen.

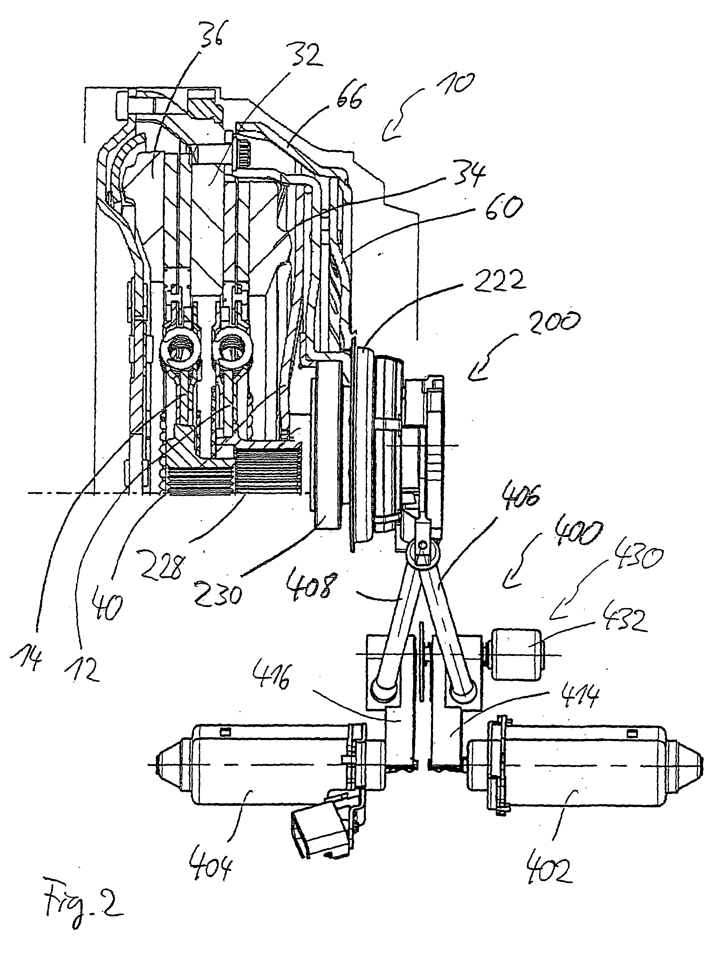

Fig. 2 zeigt eine etwas detaillierter dargestellte Doppelkupplung 10 der anhand Fig. 1 erläuterten Art samt einem zugehörigen Betätigungsmodul 200 und über das Modul auf die beiden Kupplungsanordnungen der Doppelkupplung wirkende Aktuatorik 400. Ohne Beschränkung der Allgemeinheit kann man annehmen, dass das Betätigungsmodul 200 von der in Fig. 1 gezeigten oder ähnlicher Art ist und eine stationäre Stützhülse, beispielsweise Zentralhülse und relativ zu dieser verdrehbare und axial bewegbare Betätigungshülsen, beispielsweise eine Innenhülse oder Außenhülse, aufweist, wobei die Betätigungshülsen auf geeignete Weise, beispielsweise über ein Gewinde, mit der Stützhülse in Eingriff stehen, um eine Drehbewegung in eine Axialbewegung umzusetzen. Betreffend die Doppelkupplung 10 und das Betätigüngsmodul 200 der Fig. 2 sind für analoge oder einander entsprechende Bauteile die gleichen Bezugszeichen wie in Fig. 1 verwendet, so dass weitere Erläuterungen entbehrlich sind. Die Aktuatorik weist zwei elektromechanische Aktuatoren 402 und 404 insbesondere auf Elektromotorbasis auf, die über eine Koppelmechanik 406 bzw. 408 auf eine jeweils zugeordnete Betätigungshülse des Betätigungsmoduls 200 und damit über die Membranfeder 40 bzw. 60 auf eine jeweils zugeordnete der beiden Kupplungsanordnungen wirken.

Ein wichtiger Gesichtspunkt ist, dass die gesamte Betätigungskette beginnend mit den Elektromotoren der Aktuatoren 402 und 404 bis hin zu den Anpressplatten 34 und 36 ein NORMALERWEISE-OFFEN-Systemverhalten zeigen sollten, damit etwa im Falle von stromlosen Elektromotoren der Aktuatoren die beiden Kupplungsanordnungen unter der Wirkung ihrer Tangentialfedem den geöffneten bzw. ausgerückten Zustand einnehmen bzw. diesen halten. Eine derartige Auslegung der gesamten Betätigungskette ist nicht zwingend, aber im Hinblick auf die Vermeidung etwa von Verspannungen im Antriebsstrang, ggf. sogar von Beschädigungen im Antriebsstrang, sehr sinnvoll. Eine derartige Auslegung hat allerdings zur Folge, dass nach herkömmlichen Ansätzen die jeweils drehmomentübertragende Kupplungsanordnung ständig vermittels des jeweiligen Aktuators mit Einrückkräften beaufschlagt werden muss, was aus energetischen Gründen und auch im Hinblick auf die Belastbarkeit der verschiedenen Komponenten der Betätigungskette nicht optimal erscheint. Um hier eine Verbesserung zu erreichen, schlägt die Erfindung vor, eine beispielsweise als Verriegelungsmechanismus oder Bremsmechanismus ausgeführte Halteanordnung vorzusehen, die einen momentanen Einrückzustand oder einen dem momentanen Einrückzustand zugeordneten Halte-Einrückzustand der jeweiligen Kupplungsanordnung halten kann, ohne etwa die Elektromotoren der Kupplungsaktuatorik 400 dauerhaft bestromen zu müssen. Bevorzugte Ausführungsvarianten dieser Halteanordnung benötigen für dieses Halten lediglich eine Hilfsenergie.

Grundsätzlich kann eine Verriegelung bzw. Positionsfixierung in der gesamten Betätigungskette zwischen der Anpressplatte der jeweiligen Kupplungsanordnung und dem elektromechanischen Betätigungselement, etwa Elektromotor, des jeweiligen Aktuator realisiert sein, wobei neben einer kraftschlüssigen, beispielsweise reibschlüssigen Verriegelung oder Positionsfixierung auch eine formschlüssige Verriegelung oder Positionsfixierung vorgesehen sein kann und die Verriegelung oder Positionsfixierung stufenlos oder in diskreten Schritten arbeiten kann. Besonders vorteilhaft ist eine stufenlose Verriegelung oder Positionsfixierung, damit ein Kupplungszustand gehalten werden kann, in dem gerade das vom Verbrennungsmotor abgegebene Drehmoment übertragen wird, so dass eine Überanpressung nicht erforderlich ist. Die Zeitanteile des Betriebs des Verbrennungsmotors im Teillastbereich sind in der Regel sehr hoch, wobei die im Teillastbereich erforderlichen Anpresskräfte vergleichsweise niedrig sind und dementsprechend in der Regel auch recht kurze Verfahrwege des Aktuators ausreichen. Kleine Verfahrwege bei kleinen Kraftniveaus reduzieren die Betätigungsarbeit und verbessern die Energiebilanz. Dieser Vorteil bleibt erhalten, wenn bei einer stufenlosen Verriegelung bzw. Positionsfixierung ein momentaner Kupplungszustand der jeweiligen Kupplungsanordnung gehalten werden kann.

Eine stufenlose Verriegelung der Aktuatorik 400 ist beim Ausführungsbeispiel der Fig. 2 realisiert. Die Aktuatorik, die ein mit einem Ausgangsglied 410 bzw. 412 des jeweiligen Aktuators 402 bzw. 404 in der Art eines Zahnradgetriebes oder Schneckengetriebes in Eingriff stehendes Zahnradsegment 414 bzw. 416 und einen vorzugsweise schwenkbar daran gehaltenen Stößel 417 bzw. 418 aufweist, der an seinem anderen, vom Zahnradsegment 414 bzw. 416 abgelegenen Ende auf eine jeweils zugeordnete der Betätigungshülsen des Betätigungsmoduls 200 wirkt, ist mit einer wahlweise auf eines der beiden Zahnradsegmente 414 bzw. 416 wirkenden Halteanordnung 430 ausgeführt, die ein elektromechanisches Stellglied 432 und ein durch das Stellglied 432 axial verstellbares plattenförmiges Halteglied 434 aufweist.

Eine Verbindungsstange zwischen dem Stellglied 432 und dem Halteelement 434 erstreckt sich längs der gemeinsamen Drehachse der beiden Zahnradsegmente 414 und 416. Eine die Zahnradsegmente 414 und 416 drehbar und das Stellglied 432 einschließlich dem Halteglied 434 sowie die Aktuatoren 402 und 404 stationär haltende Traganordnung ist in den Figuren nicht gezeigt.

Das Halteglied 434 ist durch eine Feder 436 in eine Mittelstellung oder Neutralstellung zwischen den beiden Zahnradsegmenten 414 und 416 federvorgespannt. Mittels des Stellglieds 432 kann das Halteglied 434 wahlweise mit dem Zahnradsegment 414 bzw. dem Zahnradsegment 416 bzw. einem auf dem jeweiligen Zahnradsegment vorgesehenen Reibbelag in reibschlüssigen Halteeingriff gebracht werden, so dass eine momentane Dreh- oder Schwenkstellung des jeweiligen Zahnradsegments 414 bzw. 416 und damit ein momentaner Kupplungszustand der zugeordneten Kupplungsanordnung gehalten wird. Wird das elektromechanische Stellglied 432 stromlos, so bewegt die Rückstellfeder 436 das Halteglied 434 zwangsweise in die Neutralstellung, so dass für die Halteanordnung 430 ein NORMALERWEISE-OFFEN-Systemverhalten und damit, wenn vorgesehen, für die gesamte Betätigungskette zwischen den Aktuatoren 402, 404 und den Kupplungsanordnungen insgesamt das vorteilhafte NORMALERWEISE-OFFEN-Systemverhalten realisiert ist.

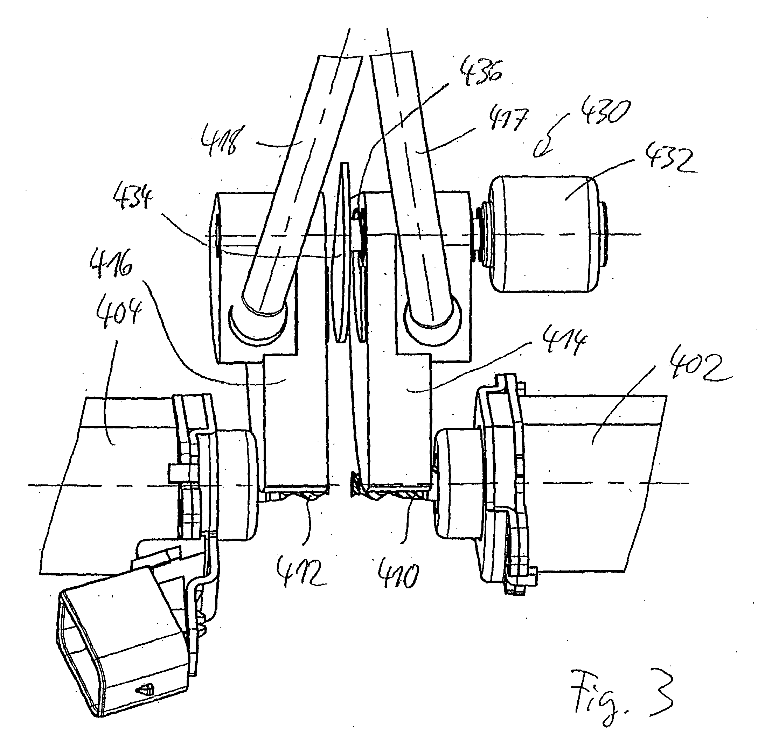

Die Halteanordnung 430 der Fig. 2 und 3 kann zutreffend auch als "Bremse" bezeichnet werden, an Stelle des oben verwendeten Begriffs "Verriegelung", der einen formschlüssigen Eingriff suggerieren mag. Hier wird der Begriff "Verriegelung" aber allgemeiner verwendet und umfasst insbesondere auch eine reibschlüssige Fixierung.

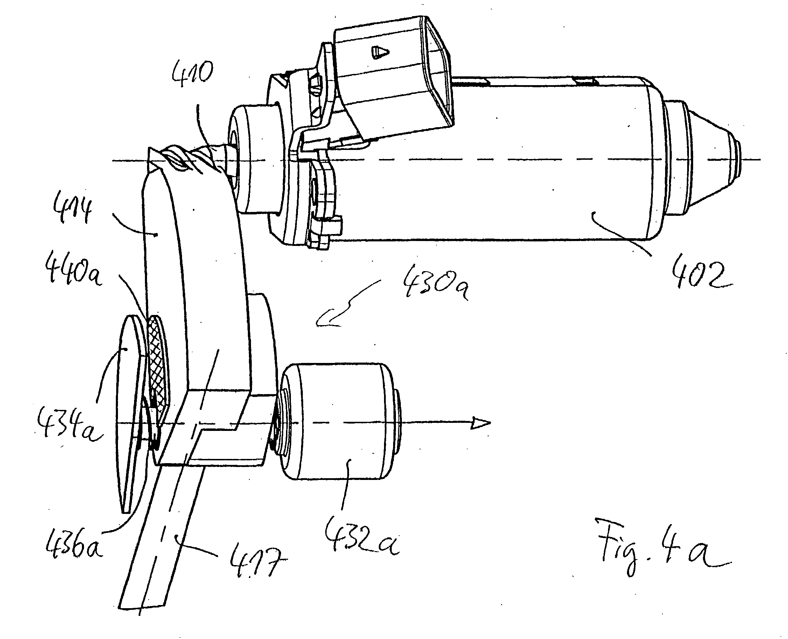

Es kann durchaus sehr zweckmäßig sein, für beide Betätigungsketten der beiden Kupplungsanordnungen jeweils eine eigene Halteanordnung zum Halten der jeweiligen Kupplungsanordnung in einem momentanen Kupplungszustand oder vorgegebenen Halte-Kupplungszustand zuzuordnen. Die Fig. 4a und 4b zeigen gemeinsam ein entsprechendes Beispiel. Dem Zahnradsegment 414 ist eine eigene Halteanordnung 430a mit dem elektromechanischen Stellglied 432a und der zugehörigen Halteplatte 434a und einer Rückstellfeder 436a zugeordnet, und dem Zahnradsegment 416 ist ebenfalls eine eigene Halteanordnung 430b mit dem elektromechanischen Stellglied 432b, der zugehörigen Halteplatte 434b und einer Rückstellfeder 436b zugeordnet. Ein auf dem Zahnradsegment 414 angeordneter Reibbelag ist mit 440a und ein auf dem Zahnradsegment 416 angeordneter Reibbelag ist mit 440b bezeichnet.

Angemerkt sei, dass die elektromechanische Ausführung des Stellglieds 432 bzw. der Stellglieder 432a und 432b nur ein zweckmäßiges Beispiel darstellt. Es kommen auch andere Wirkungsprinzipien für die Bereitstellung eines entsprechenden Stellglieds in Betracht, beispielsweise eine Piezoelementanordnung oder eine Halteelement-Bimetallelement-Anordnung. Eine weitere Möglichkeit ist ein druckfluidbetätigtes Stellglied.

Es ist durchaus auch denkbar, dass die Halteanordnung an einem anderen Element der Betätigungskette angreift, beispielsweise an den Ausgangsgliedern 410 und 412 der Aktuatoren 402 und 404, an den Betätigungsstößeln 417 und 418 oder auch unmittelbar an den Betätigungsgliedern, ggf. Betätigungshülsen, des Betätigungsmoduls 200. Ein Angriff am Ausgangsglied des jeweiligen Aktuators oder sogar eine in den Aktuator integrierte Halteanordnung hat den Vorteil, dass die Untersetzung des betreffenden Zahnradsegments 414 bzw. 416 auch in Bezug auf die von der Halteanordnung aufgebrachten Haltekräfte wirksam ist und insoweit geringere Haltekräfte ausreichen. Eine Zuordnung der Halteanordnung zu einer der jeweiligen Kupplungsanordnung näheren Glied der Betätigungskette hat' hingegen den Vorteil, dass die dahinter auf Seite des jeweiligen Aktuators liegenden Glieder der Betätigungskette keine Haltekräfte übertragen müssen und insoweit entlastet sind.

Neben einer stufenlosen Verriegelung bzw. Positionsfixierung etwa entsprechend den Ausführungsbeispielen der Fig. 1 bis 4 kommt eine in diskreten Schritten oder Stufen, ggf. geometrisch vorgegebenen Stufen, arbeitende Verriegelung in Betracht. Durch entsprechende Auslegung der Stufen und Wahl der Stufenzahl kann ohne weiteres eine akzeptable Anpassung an den jeweiligen Lastzustand der betreffenden Kupplungsanordnung erreicht werden. Man kann jeweils eine Verriegelungsstufe auswählen, die das momentan anliegende Drehmoment abdeckt, so dass die Kupplungsanordnung das Drehmoment weiter übertragen kann. Man kann eine zweckmäßige Nachführung der Verriegelung vorsehen, um Kupplungsschlupf zu vermeiden. Wird die Obergrenze einer jeweiligen Stufe überschritten, so tritt eine Relativdrehzahl auf. Diese Relativdrehzahl kann dann als Eingangssignal zur Aktivierung der Kupplungsaktuatorik oder/und eines Stellglieds der Halteanordnung dienen, um die nächste Verriegelungsstufe einzustellen.

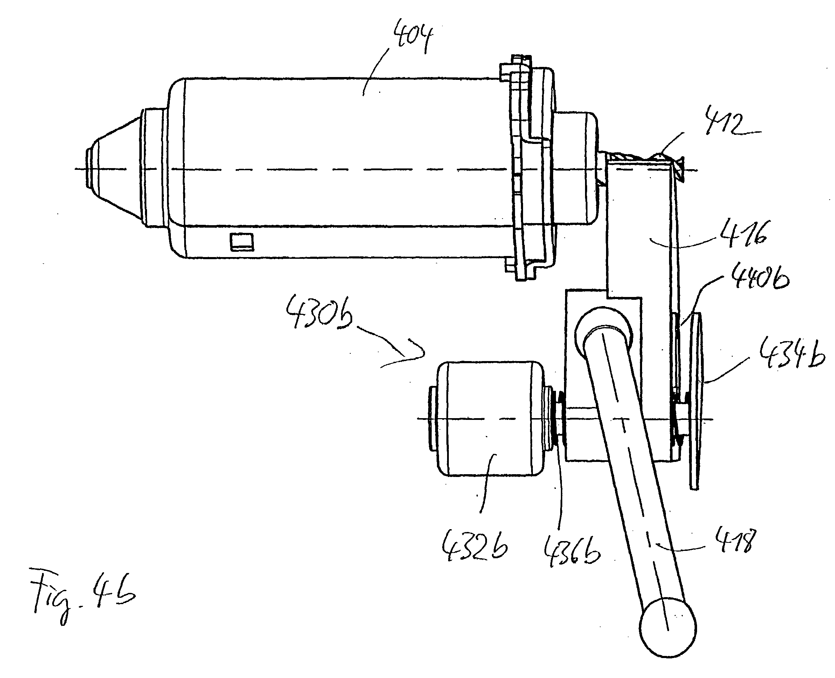

Fig. 5 zeigt ein Beispiel für eine eine stufenweise Verriegelung in der Art eines Einrastens vorstehende Halteanordnung 430c. Wie bei den Ausführungsbeispielen der Fig. 1 bis 4 wirkt ein Aktuator, beispielsweise der Aktuator 402, auf ein Zahnradsegment, vorliegend das Zahnradsegment 414. Das Zahnradsegment ist mit einer Rasterung 450 ausgeführt, mit der eine an einem stationären Träger schwenkbar angeordnete Sperrklinke 452 formschlüssig in Eingriff treten kann. Die Sperrklinke 452 ist durch eine Rückstellfeder 454 in Richtung eines Abhebens aus der Rasterung 450 vorgespannt.

Die Sperrklinke 452 ist als Arm eines zweiarmigen Hebels ausgeführt, dessen anderer Arm 456 mit einem Stellglied 458 zusammenwirkt, derart, dass bei Erregung des Stellglieds 458 der Arm 456 in Richtung des Pfeils S gezogen und damit die Sperrklinge 452 gegen die Rückstellwirkung der Feder 454 in Eingriff mit der in diskreten Schritten ausgeführten Rasterung 450 geschwenkt wird.

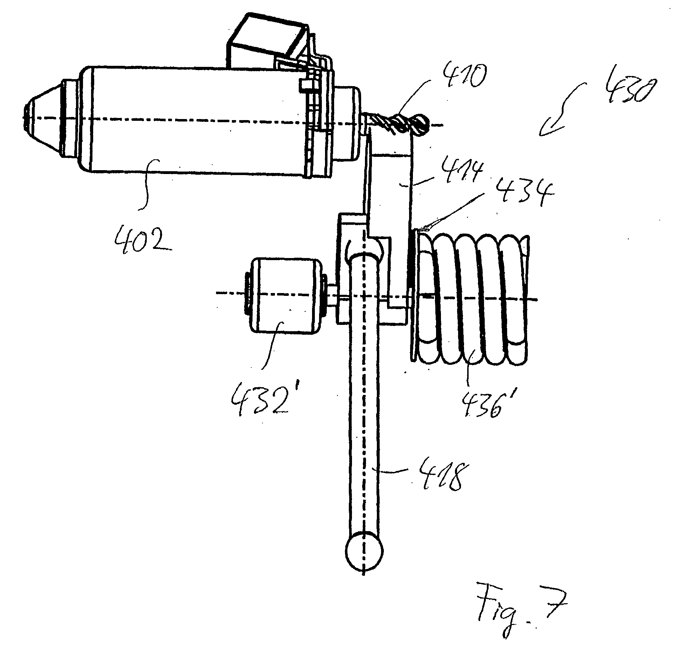

Fig. 7 zeigt eine Ausführungsvariante der Anordnung der Fig. 7a oder 7b, bei der das Halteglied 434 durch eine Feder 436' in Richtung des Eingriffs mit dem Reibbelag auf dem Zahnradsegment 414 vorgespannt ist. Das Stellglied 432' arbeitet gegen die Einrück- bzw. Bremskräfte der Feder 436', um die Halteanordnung 430 zu deaktivieren, also den Eingriff zwischen dem Halteglied 434 und dem Reibbelag aufzuheben. Die Halteanordnung 430 schließt also im stromlosen bzw. kraftlosen Zustand des Stellglieds 432' selbsttätig und hält damit die Betätigungsanordnung in ihrem momentanen Betätigungszustand unabhängig davon, ob der Aktuator 402 momentan kraftlos oder stromlos ist oder nicht. Im Falle eines unabsichtlichen Kraftlos- bzw. Stromloswerdens des Stellglieds 432, etwa in Folge eines Systemfehlers, wird dies in der Regel der Fall sein. Man kann auch gezielt zum Halten eines momentanen Betätigungszustands und damit eines momentanen Kupplungszustands das Stellglied 432' stromlos- bzw. kraftlos machen, wobei es aus energetischen Gründen sinnvoll ist, zugleich auch den Aktuator 402 stromlos bzw. kraftlos zu machen.

Die Aktuator-bzw. Betätigüngsanordnung der Fig. 7 zeichnet sich durch ein Systemverhalten aus, das in Abgrenzung zu einem NORMALERWEISE-OFFEN-Systemverhalten und einem NORMALERWEISE-GESCHLOSSEN-Systemverhalten sich treffend als "NORMALERWEISE-GEHALTEN"-Systemverhalten charakterisierbar ist. Sofern nicht der Aktuator 402 und das Stellglied 432' entsprechend angesteuert werden, wird der momentane Betätigungszustand und damit der momentane Kupplungszustand einer zugeordneten Reibungskupplung gehalten. Das Stellglied kann speziell für eine solche Anwendung zweckmäßig als bestromter Magnet ausgeführt sein.

Im Falle eines Doppelkupplungssystems, beispielsweise Doppelkupplungssystem der Trockenkupplungsbauweise, bleibt das System in, Folge des "NORMALERWEISE-GEHALTEN"-Systemverhaltens im Fehlerfall, speziell bei Stromausfall stets in einem Zustand stehen, der momentan gerade eingestellt ist. Auf diese Weise kann eine Notfahr-Funktionalität bereitgestellt werden.

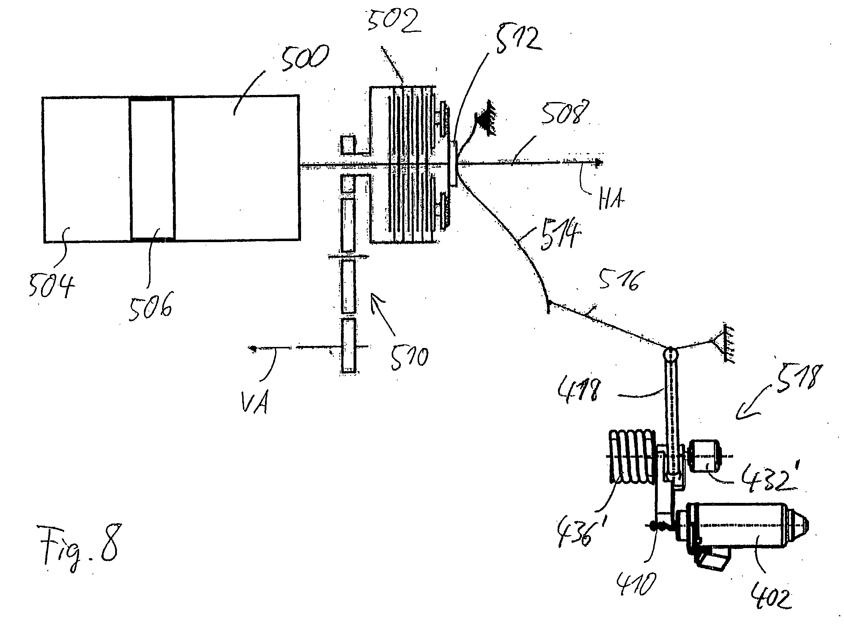

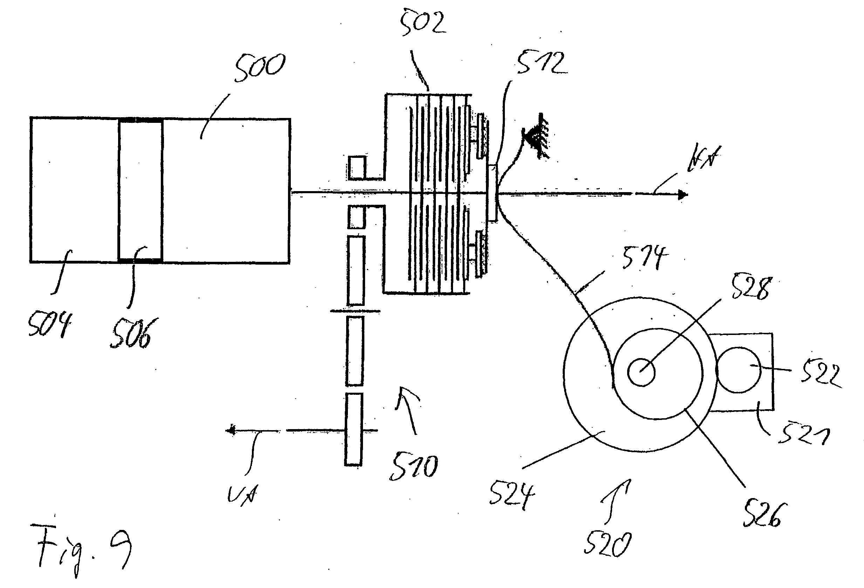

Besonders zweckmäßig ist ein solches Systemverhalten in einem anderen technischen Zusammenhang. In Allrad-Fahrzeugen, beispielsweise so genannte SUV-Fahrzeugen, wird häufig ein im Wesentlichen von einer Reibungskupplung, speziell Lamellenkupplung, gebildetes Verteilergetriebe eingesetzt, das zur Verteilung des Motormoments auf Vorderachse und Hinterachse dient. Das Verteilergetriebe ist im Antriebsstrang nach dem Hauptgetriebe angeordnet. Nach einer anderen Betrachtungsweise könnte man auch davon sprechen, dass vermittels einer entsprechenden Kupplungseinrichtung ein zusätzliches Verteilergetriebe zuschaltbar ist. Unabhängig von der Art der Ausführung der verwendeten "Verteiler-Reibungskupplung" ist es zweckmäßig, wenn die Kupplung kraft- bzw. stromlos geschlossen gehalten werden könnte. Dies kann beispielsweise auf Grundlage der Anordnung der Fig. 7 sowie alternativ durch Einsatz eines Elektromotors mit eingebauter Motorbremse erreicht werden, wie schematisch in den Fig. 8 und 9 gezeigt.

Gemäß Fig. 8 ist im Antriebsstrang einem Schaltgetriebe 500 eine nasslaufende Lamellenkupplung 502 nachgeschaltet. Das Schaltgetriebe 500 empfängt Antriebsmomente von einer Antriebseinheit 504 durch Vermittlung einer Reibungskupplung 506. Die Getriebeabtriebswelle 508 ist beispielsweise mit den angetriebenen Hinterachsenrädern gekoppelt, sie führt also das Antriebsmoment zu den angetriebenen Hinterrädern. Über die Lamellenkupplung 502 und eine Stirnradstufe 510 sind angetriebene bzw. antreibbare Vorderachsenräder zuschaltbar. Die Aufteilung des Antriebsmoments vom Getriebe 500 zwischen den Vorderrädern und den Hinterrädern ist über die Lamellenkupplung 502 einstellbar. Die Pfeile HA und VA stehen für den Momentenfluss zur Hinterachse (HA) bzw. zur Vorderachse (VA).

Die Lamellenkupplung 502 ist über einen an einer Druckplatte 512 der Lamellenkupplung angreifenden Einrückhebels 514, einen damit gekoppelten oder koppelbaren Kniehebels 516, der einseitig stationär, aber verschwenkbeweglich abgestützt ist und eine Betätigungsanordnung 518 einrückbar, die der Anordnung der Fig. 7 entspricht.

Fig. 9 zeigt eine Ausführungsvariante, bei der anstelle der Anordnung gemäß Fig. 7 und des Kniehebels eine elektromotorisch verdrehbare Exzenteranordnung 520 vorgesehen ist, die auf den Einrückhebel 514 wirkt. 522 bezeichnet ein Ausgangselement, beispielsweise Ritzel, eines Elektromotors 521 mit eingebauter Motorbremse. Das Ritzel 522 kämmt mit einem Zahnrad 524, das mit einem Exzenter 526 drehfest verbunden ist und mit diesem eine gemeinsame Drehachse 528 aufweist. Der Exzenter wirkt in der Art eines Betätigungsnockens auf den Einrückhebel 514. Es sei angemerkt, dass der Exzenter auch unmittelbar auf die Druckplatte 512 wirken könnte. Entsprechendes gilt für die Ausführungsform der Fig. 8. Der Stößel 408 oder alternativ der Kniehebel 516 könnte auch unmittelbar, also ohne zwischengeschalteten Einrückhebel, auf die Druckplatte 512 wirken.

Durch die Verwendung des Elektromotors mit integrierter Motorbremse, die eine momentan eingeregelte oder gesteuert eingestellte Position hält, wird ebenfalls das angesprochene "NORMALERWEISE-GEHALTEN"-Systemverhalten erreicht.

Angemerkt sei, dass bei den Anordnungen der Fig. 8 und 9 die Erfindungsvorschläge zusätzlich auch noch auf die Reibungskupplung 506 zwischen Antriebseinheit und Getriebe angewendet sein könnten.

Zu den erläuterten Ausführungsbeispielen und speziell den angesprochenen Figuren sei angemerkt, dass die Figuren teilweise nur schematisch sind und verschiedene, für den Fachmann selbstverständliche Details nicht zeigen, beispielsweise nicht die Zähne der Zahnradsegmente sowie - wie schon angesprochen Trägeranordnungen für die verschiedenen Komponenten. Soweit zweckmäßig, wird man die verschiedenen stationären Komponenten so weit als möglich am Kupplungsgehäuse bzw. der Kupplungsgehäuseglocke bzw. am Antriebsstrang oder an der Karosserie anbringen bzw. abstützen.

## Patentansprüche

1. Kupplungssystem, umfassend eine Reibungskupplungseinrichtung (10) zur Anordnung im Antriebsstrang eines Kraftfahrzeugs mit wenigstens einer gegen in Ausrückrichtung wirkende mechanische Rückstellkräfte einrückbaren Kupplungsanordnung (12, 32, 34; 14, 32, 36) und eine Betätigungseinrichtung (200, 400) zum Einleiten von im Einrücksinne gegen die Rückstellkräfte wirkenden, auf Betätigungskräften einer elektromotorischen Aktuatoranordnung (402, 404) beruhenden Einrückkräften in die Reibungskupplungseinrichtung, um die Kupplungsanordnung im Einrücksinne zu betätigen,
**dadurch gekennzeichnet,**
**dass** eine der Reibungskupplungseinrichtung oder/und der Kupplungsanordnung oder/und der Betätigungseinrichtung oder/und der Aktuatoranordnung zugeordnete Halteanordnung (430; 430a, 430b; 430c) vorgesehen ist, mittels der die Kupplungsanordnung gegen die Wirkung der Rückstellkräfte unabhängig von der Erzeugung von Betätigungskräften durch die Aktuatoranordnung (402, 404) im Wesentlichen in jedem beliebigen momentanen Einrückzustand oder in einem von einer Mehrzahl von vorgegebenen diskreten Halte-Einrückzuständen haltbar ist, der dem momentanen Einrückzustand zugeordnete ist.

2. Kupplungssytem nach Anspruch 1,
**dadurch gekennzeichnet, dass** die Betätigungseinrichtung wenigstens ein der Kupplungsanordnung zugeordnetes Betätigungsglied (222, 224) umfasst, das relativ zu wenigstens einem axial im Wesentlichen feststehenden Stützglied (220) zum Ausüben der Einrückkräfte axial verstellbar ist und zu einem der Kupplungsanordnung zugeordneten Aktuator gehört oder unter Vermittlung eines der Kupplungsanordnung zugeordneten Aktuators (402 bzw. 404) axial relativ zum Stützglied verstellbar ist.

3. Kupplungssystem nach Anspruch 1 oder 2,
**dadurch gekennzeichnet,**
**dass** das/ein Betätigungsglied (222 bzw. 224; 512) der Betätigungseinrichtung mit einem um eine Achse dreh- oder schwenkbaren Ausgangsteil (410 bzw. 412) des elektromotorischen Aktuators (402 bzw. 404) über eine Koppelmechanik bewegungsverkoppelt oder bewegungsverkoppelbar ist.

4. Kupplungssystem nach einem der Ansprüche 1 bis 3,
**dadurch gekennzeichnet,**
**dass** die Halteanordnung (430; 430a, 430b; 430c) dafür ausgebildet ist, wenigstens ein Glied (414 bzw. 416) einer von einem/dem Aktuator zu einer miteinander in paarweisen reibschlüssigen Eingriff bringbaren Reibflächenanordnung führenden Betätigungskette, welche das Betätigungsglied (222 bzw. 224) sowie ggf. wenigstens ein Koppelteil (414, 417; 416, 418), insbesondere Eingangsteil oder/und Ausgangsteil, der Koppelmechanik umfasst, in einer momentanen Stellung oder einer der momentanen Stellung zugeordneten, zu dieser benachbarten Haltestellung zu halten.

5. Kupplungssystem nach Anspruch 4,
**dadurch gekennzeichnet,**
**dass** das betreffende Glied mit einem zugeordneten Halteglied (434; 434a bzw. 434b; 452) der Halteanordnung in Halteeingriff bringbar ist.

6. Kupplungssystem nach Anspruch 5,
**dadurch gekennzeichnet,**
**dass** das betreffende Glied über einen diesem zugeordneten kontinuierlichen Bewegungsbereich in jeder beliebigen momentanen Position durch den Halteeingriff mit dem Halteglied (434; 434a bzw. 434b) haltbar ist.

7. Kupplungssystem nach Anspruch 5 oder, 6,
**dadurch gekennzeichnet,**
**dass** wenigstens ein Stellglied (432; 432a bzw. 432b; 458) vorgesehen ist, mittels dem das betreffende Glied und das zugeordnete Halteglied in Halteeingriff bringbar sind, oder/und dass wenigstens ein Stellglied (432') vorgesehen ist, mittels dem der Halteeingriff zwischen dem betreffenden Glied und dem zugeordneten Halteglied aufhebbar ist.

8. Kupplungssystem nach Anspruch 7,
**dadurch gekennzeichnet,**
**dass** das betreffende Glied und das zugeordnete Halteglied (434; 434a bzw. 434b; 452) durch das Stellglied (432; 432a bzw. 434b; 458) gegen auf wenigstens eines dieser Glieder wirkende, vorzugsweise von einer Kraftspeicheranordnung (436a bzw. 436b) aufgebrachte mechanische Rückstellkräfte in Halteeingriff bringbar sind und der Halteeingriff auf Grundlage der Rückstellkräfte aufhebbar ist.

9. Kupplungssystem nach Anspruch 7,
**dadurch gekennzeichnet,**
**dass** das betreffende Glied und das zugeordnete Halteglied (434) durch von einer mechanischen Einrückanordnung, insbesondere Kraftspeicheranordnung (436') aufgebrachte Einrückkräfte in Halteeingriff bringbar sind und der Halteeingriff durch das Stellglied (432') aufhebbar ist.

10. Kupplungssystem nach einem der Ansprüche 7 bis 9,
**dadurch gekennzeichnet,**
**dass** das Stellglied (432; 432a bzw. 434b; 458) wenigstens einen Elektromotor zum Erzeugen von Stellkräften aufweist.

11. Kupplungssystem nach einem der Ansprüche 5 bis 10,
**dadurch gekennzeichnet,**
**dass** als Aktuator ein Elektromotor (521) mit eingebauter Motorbremse eingesetzt ist, wobei die Motorbremse dafür ausgelegt ist, im stromlosen Zustand des Elektromotors einen momentanen Betätigungszustand des Elektromotors, insbesondere eine momentane Drehstellung eines/des Ausgangsteils (522) des Elektromotors zu halten.

12. Kupplungssystem nach einem der Ansprüche 5 bis 10,
**dadurch gekennzeichnet,**
**dass** das oder ein Koppelteil (414 bzw. 416) der Koppelmechanik, insbesondere das Eingangsteil (414 bzw. 416) oder/und das Ausgangsteil der Koppelmechanik, das betreffende Glied ist.

13. Kupplungssystem nach einem der Ansprüche 5 bis 12,
**dadurch gekennzeichnet,**
**dass** das Ausgangsteil (410 bzw. 412) des Aktuators und das/ein Eingangsteil (414 bzw. 416) der Koppelmechanik über ein Schnecken- oder Zahnradgetriebe bewegungsverkoppelt sind oder ein eine Bewegungsverkoppelung vorsehendes Schnecken- oder Zahnradgetriebe bilden.

14. Kupplungssystem nach Anspruch 13,
**dadurch gekennzeichnet,**
**dass** das als Zahnrad oder Zahnradsegment ausgeführte Eingangsteil (414 bzw. 416) der Koppelmechanik oder ein damit bewegungsverkoppeltes oder bewegungsverkoppelbares Stößelelement zur direkten oder indirekten Ankoppelung am Betätigungsglied (222 bzw. 224) das betreffende Glied ist.

15. Kupplungssystem nach einem der Ansprüche 1 bis 14,
**dadurch gekennzeichnet,**
**dass** die Kupplungseinrichtung (10) eine Doppel- oder Mehrfach-Kupplungseinrichtung mit einer einem ersten Getriebezug zugeordneten ersten Kupplungsanordnung (12, 32, 34) und einer einem zweiten Getriebezug zugeordneten zweiten Kupplungsanordnung (14, 32, 36) ist, die unabhängig voneinander mittels eines jeweiligen Aktuators (402 bzw. 404) betätigbar sind.

16. Kupplungssystem nach Anspruch 15 sowie nach Anspruch 7,
**dadurch gekennzeichnet,**
**dass** zwei voneinander unabhängige Halteanordnungen (430a, 430b) vorgesehen sind, um die beiden Kupplungsanordnungen (12, 32, 34; 14, 32, 36) unabhängig voneinander sowie unabhängig von der Erzeugung von Betätigungskräften durch den jeweiligen Aktuator (402 bzw. 404) in einem momentanen Einrückzustand oder einem dem momentanen Einrückzustand zugeordneten Halte-Einrückzustand halten zu können.

## Claims

1. Clutch system, comprising a friction clutch device (10) for arrangement in the drive train of a motor vehicle having at least one clutch arrangement (12, 32, 34; 14, 32, 36) which can be engaged counter to mechanical restoring forces which act in the disengagement direction, and having an actuation device (200, 400) for introducing engagement forces into the friction clutch device which act counter to the restoring forces in the direction of engagement and are based on actuation forces of an electric-motor actuator arrangement (402, 404), in order to actuate the clutch arrangement in the direction of engagement,
**characterized in that** a holding arrangement (430; 430a, 430b; 430c) is provided which is assigned to the friction clutch device and/or the clutch arrangement and/or the actuation device and/or the actuator arrangement and by means of which the clutch arrangement can be held counter to the effect of the restoring forces independently of the generation of actuation forces by the actuator arrangement (402, 404) substantially in any desired instantaneous engagement state or in one of a plurality of predefined discrete holding engagement states which is assigned to the instantaneous engagement state.

2. Clutch system according to Claim 1, **characterized in that** the actuation device comprises at least one actuation element (222, 224) which is assigned to the clutch arrangement, can be displaced axially relative to at least one axially substantially stationary supporting element (220) in order to exert the engagement forces, and belongs to an actuator assigned to the clutch arrangement or can be displaced axially relative to the supporting element via an actuator (402 or 404) which is assigned to the clutch arrangement.

3. Clutch system according to Claim 1 or 2, **characterized in that** the/an actuation element (222 or 224; 512) of the actuation device is coupled in terms of movement, or can be coupled in terms of movement, via a coupling mechanism to an output part (410 or 412) of the electric-motor actuator (402 or 404), which output part (410 or 412) can be rotated or pivoted about an axis.

4. Clutch system according to one of Claims 1 to 3, **characterized in that** the holding arrangement (430; 430a, 430b; 430c) is configured for the purpose of holding at least one element (414 or 416) of an actuation chain, which leads from an/the actuator to a friction-surface arrangement, which can be moved into mutual frictional engagement in pairs, and comprises the actuation element (222 or 224) and optionally at least one coupling part (414, 417; 416, 418), in particular an input part and/or output part, of the coupling mechanism, in an instantaneous position or a holding position which is assigned to the instantaneous position and adjacent to the latter.

5. Clutch system according to Claim 4, **characterized in that** the relevant element can be moved into holding engagement with an associated holding element (434; 434a or 434b; 452) of the holding arrangement.

6. Clutch system according to Claim 5, **characterized in that** the relevant element can be held over a continuous movement region assigned to the said element in any desired instantaneous position by the holding engagement with the holding element (434; 434a or 434b).

7. Clutch system according to Claim 5 or 6, **characterized in that** at least one actuating element (432; 432a or 432b; 458) is provided, by means of which the relevant element and the associated holding element can be moved into holding engagement, and/or **in that** at least one actuating element (432') is provided, by means of which it is possible to cancel the holding engagement between the relevant element and the associated holding element.

8. Clutch system according to Claim 7, **characterized in that** the relevant element and the associated holding element (434; 434a or 434b; 452) can be moved into holding engagement by the actuating element (432; 432a or 432b; 458) counter to mechanical restoring forces which act on at least one of these elements and are preferably applied by a force-accumulator arrangement (436a or 436b), and it is possible to cancel the holding engagement on the basis of the restoring forces.

9. Clutch system according to Claim 7, **characterized in that** the relevant element and the associated holding element (434) can be moved into holding engagement by engagement forces which are applied by a mechanical engagement arrangement, in particular a force-accumulator arrangement (436'), and it is possible to cancel the holding engagement using the actuating element (432').

10. Clutch system according to one of Claims 7 to 9, **characterized in that** the actuating element (432; 432a or 432b; 458) has at least one electric motor for generating actuating forces.

11. Clutch system according to one of Claims 5 to 10, **characterized in that** an electric motor (521) with an incorporated motor brake is used as the actuator, the motor brake being configured for the purpose of holding an instantaneous actuation state of the electric motor, in particular an instantaneous rotational position of an/the output part (522) of the electric motor, in the currentless state of the electric motor.

12. Clutch system according to one of Claims 5 to 10, **characterized in that** the or one coupling part (414 or 416) of the coupling mechanism, in particular the input part (414 or 416) and/or the output part of the coupling mechanism, is the relevant element.

13. Clutch system according to one of Claims 5 to 12, **characterized in that** the output part (410 or 412) of the actuator and the/an input part (414 or 416) of the coupling mechanism are coupled in terms of movement via a worm gear mechanism or gear-wheel mechanism, or form a worm gear mechanism or gear-wheel mechanism which ensures coupling of movements.

14. Clutch system according to Claim 13, **characterized in that** the input part (414 or 416) of the coupling mechanism, which input part (414 or 416) is configured as a gear wheel or gear-wheel segment, or a plunger element, which is or can be coupled in terms of movement to the said input part (414 or 416) for the direct or indirect coupling to the actuation element (222 or 224), is the relevant element.

15. Clutch system according to one of Claims 1 to 14, **characterized in that** the clutch device (10) is a double or multiple clutch device having a first clutch arrangement (12, 32, 34) assigned to a first gear train and a second clutch arrangement (14, 32, 36) assigned to a second gear train, which clutch arrangements can be actuated independently of one another by means of a respective actuator (402 or 404).

16. Clutch system according to Claim 15 and according to Claim 7, **characterized in that** two independent holding arrangements (430a, 430b) are provided, in order for it to be possible to hold the two clutch arrangements (12, 32, 34; 14, 32, 36), independently of one another and independently of the generation of actuation forces by the respective actuator (402 or 404), in an instantaneous engagement state or a holding engagement state which is assigned to the instantaneous engagement state.

## Revendications

1. Système d'embrayage, comprenant un dispositif d'embrayage à friction (10) à disposer dans la ligne d'entraînement d'un véhicule automobile et pourvu d'au moins un ensemble d'embrayage (12, 32, 34 ; 14, 32, 36) pouvant être embrayé à l'encontre de forces mécaniques de rappel agissant dans la direction de débrayage, et comprenant un dispositif d'actionnement (200, 400) pour introduire dans le dispositif d'embrayage à friction, afin d'actionner l'ensemble d'embrayage dans le sens d'embrayage, des forces d'embrayage basées sur des forces d'actionnement d'un ensemble d'actionneur (402, 404) à moteur électrique qui agissent dans le sens d'embrayage à l'encontre des forces de rappel,
**caractérisé en ce qu'**il est prévu un ensemble de maintien (430 ; 430a, 430b ; 430c), qui est associé au dispositif d'embrayage à friction et/ou à l'ensemble d'embrayage et/ou au dispositif d'actionnement et/ou à l'ensemble d'actionneur et au moyen duquel l'ensemble d'embrayage peut être, à l'encontre de l'action des forces de rappel et indépendamment de la production de forces d'actionnement par l'ensemble d'actionneur (402, 404), maintenu sensiblement dans n'importe quel état d'embrayage momentané ou dans l'un d'une pluralité d'états discrets prédéfinis d'embrayage de maintien qui est associé à l'état d'embrayage momentané.

2. Système d'embrayage selon la revendication 1, **caractérisé en ce que** le dispositif d'actionnement comprend au moins un organe d'actionnement (222, 224) associé à l'ensemble d'embrayage, organe qui fait partie d'un actionneur associé à l'ensemble d'embrayage et qui, afin d'exercer les forces d'embrayage, peut être déplacé axialement par rapport à au moins un organe de soutien (220) essentiellement fixe en direction axiale, ou qui peut être déplacé axialement par rapport à l'organe de soutien par l'intermédiaire d'un actionneur (402 ou 404) associé à l'ensemble d'embrayage.

3. Système d'embrayage selon la revendication 1 ou 2, **caractérisé en ce que** l'organe/un organe d'actionnement (222 ou 224 ; 512) du dispositif d'actionnement est ou peut être couplé en déplacement, par l'intermédiaire d'un mécanisme de couplage, à un élément de sortie (410 ou 412), rotatif ou pivotant autour d'un axe, de l'actionneur (402 ou 404) à moteur électrique.

4. Système d'embrayage selon l'une quelconque des revendications 1 à 3, **caractérisé en ce que** l'ensemble de maintien (430 ; 430a, 430b ; 430c) est conçu pour maintenir dans une position momentanée, ou dans une position de maintien associée à la position momentanée et voisine de celle-ci, au moins un organe (414 ou 416) d'une chaîne d'actionnement menant d'un actionneur/de l'actionneur à un ensemble de surfaces de friction pouvant être amenées en engagement de friction par paires, chaîne qui comprend l'organe d'actionnement (222 ou 224) ainsi que le cas échéant au moins un élément de couplage (414, 417 ; 416, 418), notamment l'élément d'entrée et/ou l'élément de sortie, du mécanisme de couplage.

5. Système d'embrayage selon la revendication 4, **caractérisé en ce que** l'organe en question peut être amené en engagement de maintien avec un organe de maintien associé (434 ; 434a ou 434b ; 452) de l'ensemble de maintien.

6. Système d'embrayage selon la revendication 5, **caractérisé en ce que** l'organe en question peut être, au moyen d'une plage continue de déplacement qui lui est associée, maintenu par l'engagement de maintien avec l'organe de maintien (434 ; 434a ou 434b) dans n'importe quelle position momentanée.

7. Système d'embrayage selon la revendication 5 ou 6, **caractérisé en ce qu'**il est prévu au moins un organe de commande (432 ; 432a ou 432b ; 458) au moyen duquel l'organe en question et l'organe de maintien associé peuvent être amenés en engagement de maintien, et/ou **en ce qu'**il est prévu au moins un organe de commande (432') au moyen duquel l'engagement de maintien entre l'organe en question et l'organe de maintien associé peut être supprimé.

8. Système d'embrayage selon la revendication 7, **caractérisé en ce que** l'organe en question et l'organe de maintien associé (434 ; 434a ou 434b ; 452) peuvent être amenés en engagement de maintien par l'organe de commande (432 ; 432a ou 432b ; 458) à l'encontre de forces mécaniques de rappel agissant sur au moins un de ces organes et exercées de préférence par un ensemble accumulateur de force (436a ou 436b), et l'engagement de maintien peut être supprimé sur la base des forces de rappel.

9. Système d'embrayage selon la revendication 7, **caractérisé en ce que** l'organe en question et l'organe de maintien associé (434) peuvent être amenés en engagement de maintien par des forces d'embrayage exercées par un ensemble embrayeur mécanique, notamment un ensemble accumulateur de force (436'), et l'engagement de maintien peut être supprimé par l'organe de commande (432').

10. Système d'embrayage selon l'une quelconque des revendications 7 à 9, **caractérisé en ce que** l'organe de commande (432 ; 432a ou 432b ; 458) présente au moins un moteur électrique pour produire des forces de commande.

11. Système d'embrayage selon l'une quelconque des revendications 5 à 10, **caractérisé en ce qu'**on utilise comme actionneur un moteur électrique (521) à frein moteur intégré, le frein moteur étant conçu pour maintenir, dans l'état hors tension du moteur électrique, un état d'actionnement momentané du moteur électrique, notamment une position de rotation momentanée d'un élément/de l'élément de sortie (522) du moteur électrique.

12. Système d'embrayage selon l'une quelconque des revendications 5 à 10, **caractérisé en ce que** l'élément ou un élément de couplage (414 ou 416) du mécanisme de couplage, en particulier l'élément d'entrée (414 ou 416) et/ou l'élément de sortie du mécanisme de couplage, est l'organe en question.

13. Système d'embrayage selon l'une quelconque des revendications 5 à 12, **caractérisé en ce que** l'élément de sortie (410 ou 412) de l'actionneur et l'élément/un élément d'entrée (414 ou 416) du mécanisme de couplage sont couplés en déplacement par l'intermédiaire d'une transmission à vis sans fin ou à roues dentées, ou forment une transmission à vis sans fin ou à roues dentées assurant un couplage en déplacement.

14. Système d'embrayage selon la revendication 13, **caractérisé en ce que** l'élément d'entrée (414 ou 416), réalisé sous forme de roue dentée ou de segment de roue dentée, du mécanisme de couplage, ou un élément formant poussoir qui lui est ou peut lui être couplé en déplacement pour l'accouplement direct ou indirect à l'organe d'actionnement (222 ou 224), est l'organe en question.

15. Système d'embrayage selon l'une quelconque des revendications 1 à 14, **caractérisé en ce que** le dispositif d'embrayage (10) est un dispositif d'embrayage double ou multiple, avec un premier ensemble d'embrayage (12, 32, 34) associé à une première ligne de transmission et un deuxième ensemble d'embrayage (14, 32, 36) associé à une deuxième ligne de transmission, qui peuvent être actionnés indépendamment l'un de l'autre au moyen d'un actionneur respectif (402 ou 404).

16. Système d'embrayage selon la revendication 15 ainsi que selon la revendication 7, **caractérisé en ce qu'**il est prévu deux ensembles de maintien (430a, 430b) indépendants l'un de l'autre, afin de pouvoir maintenir les deux ensembles d'embrayage (12, 32, 34 ; 14, 32, 36) dans un état d'embrayage momentané, ou dans un état d'embrayage de maintien qui est associé à l'état d'embrayage momentané, indépendamment l'un de l'autre ainsi qu'indépendamment de la production de forces d'actionnement par l'actionneur respectif (402 ou 404).
